# EUROPÄISCHE PATENTSCHRIFT

(11) **EP 1 380 447 B1**
(45) Veröffentlichungstag und Bekanntmachung des Hinweises auf die Patenterteilung: **04.01.2006**
(21) Anmeldenummer: 03007574.1
(22) Anmeldetag: 02.04.2003
(51) Int. Cl.: B60D 1/62, B60D 1/54

(54) **Anhängezugvorrichtung**
Towing assembly
Dispositif d'attelage

(30) Priorität: 11.07.2002 DE 10231223
(43) Veröffentlichungstag der Anmeldung: 14.01.2004
(73) Patentinhaber: Dr.Ing. h.c.F. Porsche Aktiengesellschaft, 70435 Stuttgart (DE)
(72) Erfinder: Reutlinger, Peter, 75015 Bretten (DE); Palmer, Eberhard, 71665 Vaihingen (DE); Piede, Andreas, 75428 Illingen (DE)

(56) Entgegenhaltungen:
- EP-A- 0 491 241
- DE-A- 3 833 471
- DE-A- 4 142 317
- DE-A- 10 004 523

## Beschreibung

Die Erfindung bezieht sich auf eine Anhängezugvorrichtung für Kraftfahrzeuge nach dem Oberbegriff des Anspruchs 1.

Aus der DE 200 16 618 U1 oder aus der DE 38 33 471 A1 ist eine derartige Steckdose für einen elektrischen Steckkontakt an einer Anhängekupplung bekannt, die mit dem Verstellen einer Kupplungsstange zwischen einer Ruhe- und Betriebsstellung mitverstellbar ist.

Die Aufgabe der Erfindung besteht darin, eine verbesserte einschwingbare Steckdose an einer Anhängezugvorrichtung zu schaffen, welche in einfacher Weise in eine Ruhe- und Betriebsstellung und zurück verfahrbar ist und eine sichere, verdeckte Anordnung am Fahrzeugheck gewährleistet.

Diese Aufgabe wird bei einer Anhängezugvorrichtung mit den Merkmalen des Patentanspruchs 1 gelöst. Weitere vorteilhafte Merkmale beinhalten die Unteransprüche.

Die mit der Erfindung hauptsächlich erzielten Vorteile bestehen darin, daß die Steckdose mit dem Verstellen des Kupplungshalses der Anhängezugvorrichtung ohne Hilfsmittel gleichzeitig die Steckdose mitgenommen wird und der Kupplungshals und die Steckdose gemeinsam eine verdeckte Ruhestellung am Fahrzeug einnehmen können. Hierzu ist nach der Erfindung vorgesehen, daß die Steckdose federnd vorgespannt am Fahrzeugaufbau bzw. an einem Träger gelagert und in Abhängigkeit von der Verstellbewegung des Kupplungshalses von diesem mitnehmend in eine ausgefahrene Betriebsstellung und in eine eingefahrene Ruhestellung und zurück verstellbar ist. Insbesondere wird die Steckdose über einen trägerseitig gehaltenen Drehzapfen um eine horizontale Achse in Hochrichtung verschwenkt, wobei die Steckdose in der Betriebsstellung mittels eines auf dem Drehzapfen angeordneten Federelements in einer Endposition gehalten wird und das Federelement sich mit einem Ende einerseits trägerseitig und mit seinem anderen abgekehrten Ende andererseits an einem fingerartigen Anschlagteil einer Lagerplatte der Steckdose abstützt.

Durch diese schwenkbare Lagerung der Steckdose und dem Bewegungsablauf des Kupplungshalses von der Betriebsstellung in die Ruhestellung wird in einfacher Weise eine kontinuierliche Mitnahme der Steckdose entsprechend der Bewegung des Kupplungshalses der Anhängezugvorrichtung möglich. Die Steckdose steht unter der Spannung des Federelements und legt sich beim Verstellen des Kupplungshalses in die Ruhestellung an diesem fest an und kann sich nach Einnahme in der Betriebsstellung in einer ausgefahrenen Endposition halten.

Hierzu ist nach der Erfindung das Anschlagteil vorgesehen, daß sich von der Lagerplatte weg erstreckt und in der Endposition einen Schenkel des mit dem Fahrzeugaufbau verbundenen Trägers untergreift. Durch dieses Anschlagteil ist die Steckdose unter der Spannung des Federelements feststehend am Träger abgestützt.

Damit eine kontinuierliche Verschwenkung der Steckdose bei Einnahme der einzelne Stellungen des Kupplungshalses in einfacher Weise möglich wird und besondere Hilfsmittel, wie beispielsweise Motoren, Stellelemente, Seile und dergleichen Mittel vermieden werden, ist nach der Erfindung in vorteilhafter Weise vorgesehen, daß der Kupplungshals im Träger um eine vertikale Achse von der Betriebsstellung in wenigstens eine Zwischenstellung unterhalb der in der Endposition stehenden Steckdose verschwenkbar ist und daß zur Einnahme der Ruhestellung der Kupplungshals nachfolgend um eine horizontale Achse im Träger verschwenkend ausgebildet ist und eine Innenfläche des Kupplungshalses der Steckdose gegenübersteht, die bei einer weiteren Schwenkbewegung den Kupplungshals anliegend untergreift und diese bis zur Ruhestellung gegen die Spannung des Federelements mitträgt.

Damit die Ruhestellung des Kupplungshalses und der Steckdose einnehmbar ist, ist die Steckdose in der Endposition unterhalb des zwei beabstandete Schenkel aufweisende Trägers angeordnet und die Steckdose ist in der Ruhestellung zwischen dem Schenkel in einen Freiraum verschwenkbar. Bei der Verstellung des Kupplungshalses von der Ruhestellung zurück in die Betriebsstellung, trägt der Kupplungshals die Steckdose aufliegend und in der Betriebsstellung des Kupplungshalses ist die Steckdose mit einem Maß beabstandet angeordnet. Vermindungsmittel zwischen der Steckdose und dem Kupplungshals sind nicht vorgesehen.

Ein Ausführungsbeispiel der Erfindung ist in der Zeichnung dargestellt und wird im folgenden näher beschrieben.
Es zeigen
- Fig. 1: eine Ansicht auf eine Anhängezugvorrichtung mit einer Position eines Kupplungshalses und einer Steckdose in einer ausgefahrenen Betriebsstellung,
- Fig. 2: eine Ansicht auf die Anhängezugvorrichtung in einer zur Seite eingeschwenkten möglichen Zwischenstellung des Kupplungshalses,
- Fig. 3: eine Ansicht auf die Anhängezugvorrichtung in einer hochgeschwenkten Zwischenstellung des Kupplungshalses,
- Fig. 4: eine Ansicht auf die Anhängezugvorrichtung in einer Ruhestellung des Kupplungshalses,
- Fig. 5: eine vergrößerte Ansicht auf den Kupplungshals mit getragener Steckdose in einer Ruhestellung,
- Fig. 6: eine schaubildliche Darstellung auf die Anhängezugvorrichtung von unten auf den Kupplungshals mit Steckdose in der Betriebsstellung und
- Fig. 7: eine vergrößerte Darstellung der Steckdose mit Lagerplatte, Drehbolzen und Anschlagteil von unten her gesehen.

Die Anhängezugvorrichtung 1 umfaßt im wesentlichen einen um eine vertikale und horizontale Achse X-X und Y-Y in eine Betriebs- und Ruhestellung II und 1 und zurück verstellbaren Kupplungshals 2, der endseitig eine Kupplungskugel 3 trägt. Der Kupplungshals 2 ist in einem Träger 4 mittels einer nicht näher gezeigten Stelleinrichtung um diese Achsen X-X und Y-Y verstellbar, der am Fahrzeugaufbau befestigbar ist und zwischen zwei Schenkeln 5 und 6 einen Freiraum F aufweist. Desweiteren ist wenigstens am Schenkel 5 des Trägers 4 über einen Drehzapfen 7 eine Steckdose 8 schwenkbar in Hochrichtung (Pfeilrichtung 16) gehalten. Insbesondere ist die Steckdose 8 mit einem Abstand a zum Kupplungshals 2 angeordnet, so daß dieser die Steckdose 8 beim Verstellen untergreifen kann.

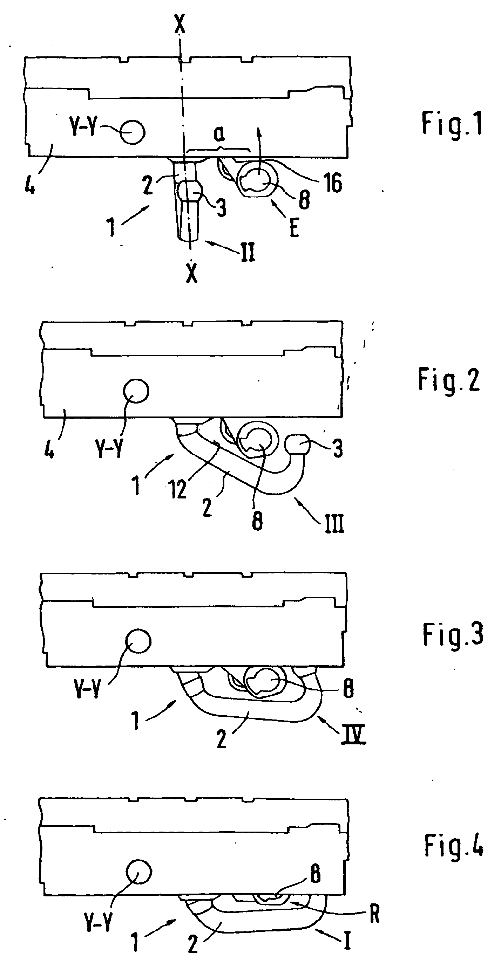

Wie in den Figuren 1 bis 4 näher dargestellt, kann der Kupplungshals 2 von der Betriebsstellung II über die beispielsweise gezeigten Zwischenstellungen III und IV in die Ruhestellung I und zurück verschwenkt werden. Hierbei wird die Steckdose 8 vom Kupplungshals 2 untergriffen und mitgenommen und somit entsprechend dem Verstellverlauf des Kupplungshalses 3 von der ausgefahrenen Endposition E in die eingefahrene Ruheposition R und zurück mitverschwenkt werden.

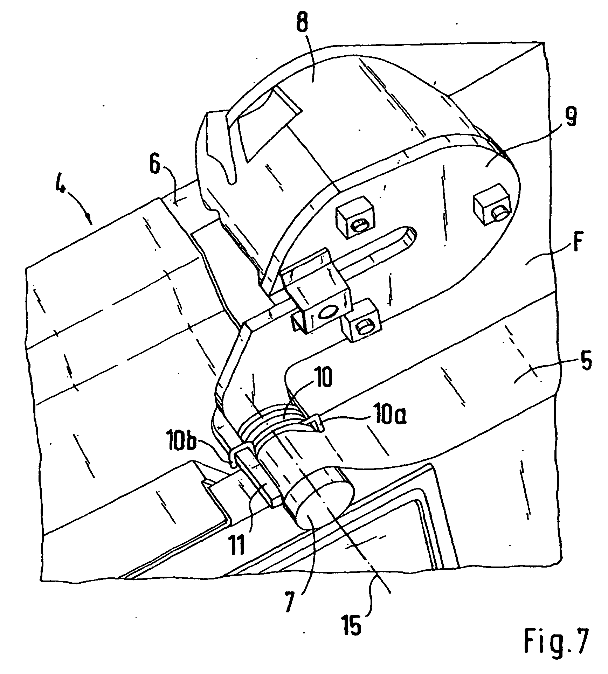

Die Steckdose 8 ist mit einer Lagerplatte 9 verbunden, die wiederum am Drehzapfen 7 befestigt ist. Über ein zwischengeschaltetes Federelement 10 wird die Steckdose 8 in der ausgefahrenen Endposition E über ein von der Lagerplatte 9 abstehendes fingerartiges Anschlagteil 11 (Fig. 7) am Schenkel 5 des Trägers 4 unter Spannung des Federelements 10 abgestützt gehalten. Bei einem Verstellvorgang des Kupplungshalses 2 um die Achse X-X von der Betriebsstellung II in die erste Zwischenstellung III nähert sich der Kupplungshals 2 der Steckdose 8 derart, daß eine innere Halsfläche 12 der Steckdose 8 von unten her gegenübersteht.

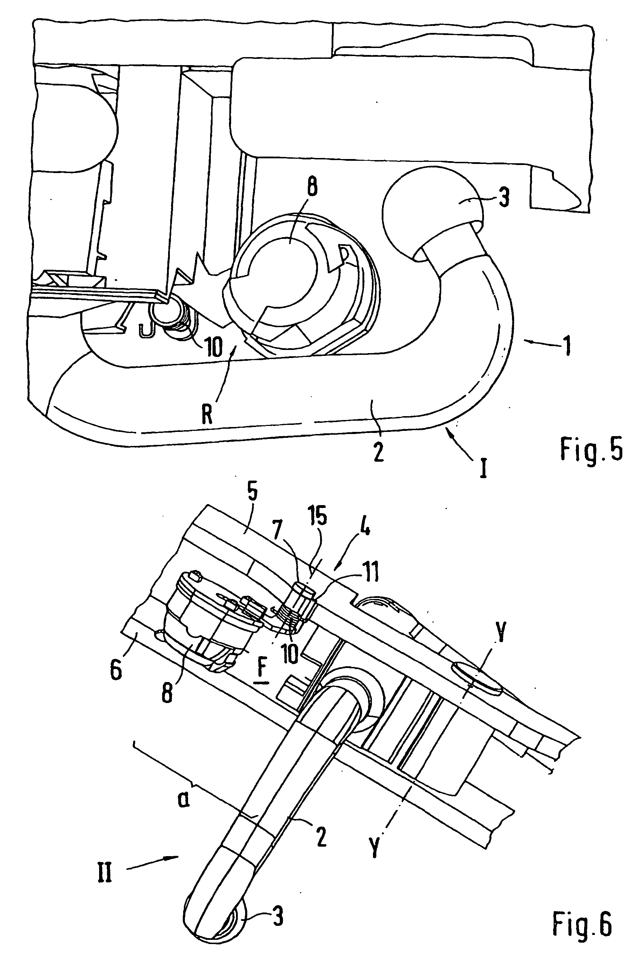

Wie in Fig. 2 näher in der Zwischenstellung IV dargestellt ist, wird der Kupplungshals 2 um die horizontale Achse Y-Y verschwenkt und die Halsfläche 12 untergreift bei diesem Vorgang die Steckdose 8 unmittelbar und steht mit dieser in Berührungskontakt. Die Steckdose 8 liegt in dieser Zwischenstellung IV unter Spannung des Federelements 10 auf der Halsfläche 12 auf. Nach einem weiteren Verschwenken des Kupplungshalses 2 um die vertikale Achse Y-Y nimmt gem. Fig. 4 der Kupplungshals 2 seine Ruhestellung I und die Steckdose die Ruheposition R ein.

In dieser Stellung 1 und der Position R sind der Kupplungshals 2 zum Teil und die Steckdose 8 im Freiraum F zwischen den Schenkeln 5 und 6 des Trägers 4 angeordnet. Da der Träger 4 noch von einer Karosserieheckblende abgedeckt wird, ist die Anhängezugvorrichtung 1 von außen her nicht mehr sichtbar.

## Patentansprüche

1. Anhängezugvorrichtung für ein Kraftfahrzeug mit einem am Fahrzeugaufbau zwischen einer Ruhestellung (I) und einer Betriebsstellung (II) verstellbaren Kupplungshals (2), der endseitig eine Kupplungskugel aufweist und an einem Träger (4) des Fahrzeugaufbaus eine verstellbar gehaltene Steckdose (8) für eine elektrische Steckerverbindung eines Anhängers vorgesehen ist, wobei die Steckdose (8) federnd vorgespannt am Träger (4) gelagert und in Abhängigkeit von der Verstellbewegung des Kupplungshalses (2) von diesem mitnehmend in eine ausgefahrene Betriebsstellung (II) und in eine eingefahrene Ruhestellung (I) verstellbar ist, wobei die Steckdose (8) über einen am Träger (4) gehaltenen Drehzapfen (7) um eine horizontale Achse (15) in Hochrichtung (16) verschwenkbar ist und die Steckdose (8) in der Betriebsstellung (II) mittels eines auf dem Drehzapfen (7) angeordneten Federelements (10) in einer Endposition (E) gehalten ist, **dadurch gekennzeichnet, daß** das Federelement (10) sich mit einem Ende (10a) einerseits am Träger (4) und mit seinem abgekehrten anderen Ende (10 b) andererseits an einem fingerartigen Anschlagteil (11) einer Lagerplatte (9) der Steckdose (8) abstützt.

2. Vorrichtung nach Anspruch 1, **dadurch gekennzeichnet, daß** das Anschlagteil (11) sich von der Lagerplatte (9) wegerstreckt und in der Endposition (E) einen Schenkel (5) des mit dem Fahrzeugaufbau verbundenen Trägers (4) untergreift.

3. Vorrichtung nach einem der vorhergehenden Ansprüche, **dadurch gekennzeichnet, daß** die Steckdose (8) in der Endstellung (E) unterhalb von zwei beabstandeten Schenkeln (5, 6) des Trägers (4) angeordnet ist und die Steckdose (8) in der Ruheposition (R) zwischen die Schenkel (5, 6) in einen Freiraum (F) verschwenkbar ist.

4. Vorrichtung nach einem der vorhergehenden Ansprüche, **dadurch gekennzeichnet, daß** der Kupplungshals (2) im Träger (4) um eine vertikale Achse (X-X) von der Betriebsstellung (II) in eine Zwischenstellung (III) unterhalb der in der Endposition (E) stehenden Steckdose (8) verschwenkbar ist und daß zur Einnahme der Ruhestellung (1) der Kupplungshals (2) nachfolgend um eine horizontale Achse (Y-Y) im Träger (4) verschwenkbar ausgebildet ist und eine Innenfläche (12) des Kupplungshalses (2) der Steckdose (8) gegenübersteht, die bei einer weiteren Schwenkbewegung den Kupplungshals (2) anliegend untergreift und diese bis zur Ruhestellung (I) gegen die Spannung des Federelements (10) mitträgt.

5. Vorrichtung nach Anspruch 4, **dadurch gekennzeichnet, daß** die Steckdose (8) in der Ruhestellung (I) unter Spannung des Federelements (10) auf dem Kupplungshals (2) zwischen den Schenkeln (5, 6) in dem Freiraum (F) des Trägers angeordnet ist.

6. Vorrichtung nach einem der vorhergehenden Ansprüche, **dadurch gekennzeichnet, daß** der Kupplungshals (2) die Steckdose (8) von der Ruhestellung (I) zumindestens in die Zwischenstellungen (Ill, IV) aufliegend trägt und in der Betriebsstellung (II) des Kupplungshalses (2) zur Steckdose (8) mit einem Maß (a) beabstandet angeordnet ist und keine Verbindung zwischen dem Kupplungshals (2) und der Steckdose (8) besteht.

## Claims

1. A trailer-towing apparatus for a motor vehicle with a coupling neck (2) which is displaceable on the vehicle body between a rest setting **(I)** and an operating setting **(II)** and which has a coupling ball at the end, and a socket box (8) held in a displaceable manner for an electrical plug connexion of a trailer is provided on a support member (4) of the vehicle body, wherein the socket box (8) is mounted on the support member (4) in a resiliently pre-stressed manner and, in a manner dependent upon the displacement movement of the coupling neck (2), is displaceable from the said coupling neck (2) in an entrained manner into an extended operating setting **(II)** and into a retracted rest setting **(I),** wherein the socket box (8) is pivotable in the vertical direction (16) about a horizontal axis (15) by way of a pivot journal (7) held on the support member (4) and the socket box (8) in the operating setting **(II)** is held in an end position **(E)** by means of a spring element (10) arranged on the pivot journal (7), **characterized in that** the spring element (10) is supported at one end (10a) on the support member (4) on one side and at its other end (10b) remote from it on a finger-like stop part (11) of a mounting plate (9) of the socket box (8) on the other side.

2. An apparatus according to Claim 1, **characterized in that** the stop part (11) extends away from the mounting plate (9) and engages in the end position **(E)** under an arm (5) of the support member (4) connected to the vehicle body.

3. An apparatus according to any one of the preceding Claims, **characterized in that** in the end position **(E)** the socket box (8) is situated below two spaced arms (5, 6) of the support member (4), and in the rest position **(R)** the socket box (8) is pivotable between the arms (5, 6) into a free space **(F).**

4. An apparatus according to any one of the preceding Claims, **characterized in that** the coupling neck (2) is pivotable in the support member (4) about a vertical axis **(X-X)** from the operating setting **(II)** into an intermediate setting **(III)** below the socket box (8) situated in the end position **(E),** and the coupling neck (2) is designed so as to be subsequently pivotable about a horizontal axis **(Y-Y)** in the support member (4) in order to occupy the rest setting **(I),** and an inner face (12) of the coupling neck (2) is opposite the socket box (8) which, with a further pivoting movement, engages under the coupling neck (2) in an abutting manner and entrains the latter as far as the rest setting **(I)** against the stressing of the spring element (10).

5. An apparatus according to Claim 4, **characterized in that** the socket box (8) in the rest setting **(I)** is arranged under the stressing of the spring element (10) on the coupling neck (2) between the arms (5, 6) in the free space **(F)** of the support member.

6. An apparatus according to any one of the preceding Claims, **characterized in that** the coupling neck (2) carries the socket box (8) in an abutting manner from the rest setting **(I)** at least into the intermediate settings **(III, IV),** and in the operating setting **(II)** of the coupling neck (2) is arranged spaced from the socket box (8) by an amount (a), and there is no connexion between the coupling neck (2) and the socket box (8).

## Revendications

1. Dispositif d'attelage de remorque pour un véhicule automobile comportant une bitte d'attelage (2), déplaçable sur la carrosserie du véhicule entre une position de repos (I) et une position de fonctionnement (II), lequel comporte côté extrémité une sphère d'attelage et, sur une poutre (4) de la carrosserie du véhicule, est prévue une prise femelle (8) maintenue déplaçable pour une liaison électrique à broches d'une remorque, la prise femelle (8) étant montée précontrainte élastiquement sur la poutre (4) et déplaçable en fonction du mouvement de déplacement de la bitte d'attelage (2), entraînée par celle-ci, dans une position de fonctionnement (II) sortie et une position de repos (A) rentrée, la prise femelle (8) pouvant pivoter, par un pivot (7) maintenu sur la poutre (4), autour d'un axe horizontal (15), vers le haut (16), et la prise femelle (8) en position de fonctionnement (II) étant maintenue, au moyen d'un élément à ressort (10) disposé sur le pivot (7), dans une position de fin de course (E), **caractérisé en ce que** l'élément à ressort (10) prend appui par une extrémité (10a) d'une part sur la poutre (4) et, par son autre extrémité (10b) opposée d'autre part, sur un élément de butée (11) de type doigt d'une plaque de support (9) de la prise femelle (8).

2. Dispositif selon la revendication 1, **caractérisé en ce que** l'élément de butée (11) s'étend depuis la plaque de support (9) et, en position de fin de course (E), passe sous une aile (5) de la poutre (4) reliée à la carrosserie du véhicule.

3. Dispositif selon l'une des revendications précédentes, **caractérisé en ce que** la prise femelle (8) en position de fin de course (E) est disposée au-dessous de deux ailes (5, 6) espacées de la poutre (4) et la prise femelle (8), en position de repos (R), peut pivoter entre les ailes (5, 6), dans un espace libre (F).

4. Dispositif selon l'une des revendications précédentes, **caractérisé en ce que** la bitte d'attelage (2) peut pivoter dans la poutre (4) autour d'un axe vertical (X-X), de la position de fonctionnement (II) à une position intermédiaire (III), au-dessous de la prise femelle (8) fixe en position de fin de course (E), et **en ce que** pour prendre la position de repos (I), la bitte d'attelage (2) est réalisée de manière à pouvoir pivoter ensuite autour d'un axe horizontal (Y-Y) dans la poutre (4), et une surface intérieure (12) de la bitte d'attelage (2) fait face à la prise femelle (8) qui, lors de la poursuite du mouvement de pivotement, passe sous la bitte d'attelage (2) en s'appliquant contre celle-ci et en entraîne celle-ci jusqu'en position de repos (I), à l'encontre de la tension de l'élément à ressort (10).

5. Dispositif selon la revendication 4, **caractérisé en ce que** la prise femelle (8) en position de repos (I) est disposée, avec contrainte de l'élément à ressort (10), sur la bitte d'attelage (2), entre les ailes (5, 6), dans l'espace libre (F) de la poutre.

6. Dispositif selon l'une des revendications précédentes, **caractérisé en ce que** la bitte d'attelage (2) porte la prise femelle (8) qui repose sur celle-ci, de la position de repos (I) au moins dans les positions intermédiaires (III, IV), et en position de fonctionnement (II) de la bitte d'attelage (2) est disposée à une distance (a) de la prise femelle (8), et aucune liaison n'existe entre la bitte d'attelage (2) et la prise femelle (8).
